# EUROPÄISCHE PATENTANMELDUNG

(11) **EP 2 287 041 A1**
(43) Veröffentlichungstag der Anmeldung: **23.02.2011**
(21) Anmeldenummer: 10006165.4
(22) Anmeldetag: 15.06.2010
(51) Int. Cl.: B60P 3/20

(54) **Fahrzeugaufbau**

(30) Priorität: 21.08.2009 DE 202009011369 U
(71) Anmelder: Fahrzeugwerk Bernard Krone GmbH, 48480 Spelle (DE)
(72) Erfinder: Rhode, Christian, 49733 Haren (DE); Bruns, Thomas, 49809 Lingen (DE)
(74) Vertreter: Busse & Busse

(57) **Zusammenfassung**

Die Erfindung betrifft einen Fahrzeugaufbau für insbesondere Kühlfahrzeuge 1 mit einem über Räder 4 auf dem Erdboden abgestützten Fahrgestell 2 an dem ein Aufnahmeboden festlegbar ist, wobei unterhalb des Aufbaubodens ein an dem Fahrgestell 2 abgestützter Ausschub 8 mit ortsfest festgelegten Ausschubführungen 9 und mit in diesen beweglich geführten Ausschubteilen 10 vorgesehen ist, insbesondere zur Anordnung eines Unterflurkühlaggregates, wobei die beweglich geführten Ausschubteile 10 über Führungskörper 11 in den Ausschubführungen 9 bewegbar sind und die Führungskörper 11 für eine Arbeits- und Transportstellung des Fahrzeuges 1 in eine im wesentlichen unbelastete Ruhestellung überführbar sind (Fig. 1).

## Beschreibung

Die Erfindung bezieht sich auf einen Fahrzeugaufbau für insbesondere Kühlfahrzeuge mit einem insbesondere über Räder auf dem Erdboden abgestützten Fahrgestell, an dem ein Aufnahmeboden festlegbar ist, wobei unterhalb des Aufnahmebodens ein an dem Fahrgestell abgestützter Ausschub mit ortsfest festgelegten Ausschubführungen und mit in diesen beweglich geführten Ausschubteilen vorgesehen ist, insbesondere zur Anordnung eines Unterflurkühlaggregates oder anderen Fahrzeugausrüstungsgegenständen wie Palettenkästen, Reserveradkörbe, Stauboxen und dgl.

Fahrzeugaufbauten der vorgenannten Art für Lastkraftwagen oder auch Anhängefahrzeuge sind bekannt und dienen beispielsweise dazu, Unterflurkühlgeräte aufzunehmen. Solche Unterflurkühlgeräte sind zu warten und in regelmäßigen Abständen auch zu reparieren bzw. in Stand zu setzen, wozu die entsprechenden Aggregatteile gut zugänglich sein müssen. Deshalb sind derartige Unterflurkühlgeräte bei Kühlfahrzeugen in einem in aller Regel unterhalb des Aufnahmebodens angeordneten Ausschub 5 und können über den Ausschub in eine für Wartungs- oder Reparaturarbeiten ausgeschobene Stellung z.B. seitlich neben das Fahrzeug gebracht werden.

Ein bekannter Fahrzeugaufbau der eingangs genannten Art verwendet U Stahlprofile, die ineinander verschoben werden, so dass es dort zu einer Paarung Stahl auf Stahl kommt. Die damit einhergehende Reibung ist erheblich. Da ein Kühlaggregat auch vielfach ein Gewicht bis zu 500 kg aufweisen kann, ist das Ausschieben der beweglich geführten Ausschubteile aus den ortsfest festgelegten Ausschubführungen nur unter enormer Kraftanstrengung möglich. Das Ausschieben aus den Führungen kann darüber hinaus durch Verschmutzung und Oxidation der verwendeten Stahlprofile weiter erschwert und sogar verhindert werden, was einen Ausfall des Fahrzeuges oder auch ein Verderben der zu kühlenden Ware bei Ausfall des Kühlaggregates beim Transport zur Folge haben kann. Aufgrund der Reibpaarung Stahl/Stahl nutzt sich eine etwaige Beschichtung der Teile schnell ab, was zu Korrosion mit der Konsequenz einer weiteren Erschwerung der Ausschiebevorgänge führt bzw. unmöglich macht.

Es ist Aufgabe der vorliegenden Erfindung, einen Fahrzeugaufbau der eingangs genannten Art dahingehend zu verbessern, dass die beweglichen Ausschubteile auch im belasteten Zustand mit verringerter Kraftanstrengung aus den ortsfest festgelegten Ausschubführungen herauszubewegen sind.

Zur Lösung dieser Aufgabe zeichnet sich der Fahrzeugaufbau der eingangs genannten Art dadurch aus, dass die beweglich geführten Ausschubteile über Führungskörper in den Ausschubführungen bewegbar sind und die Führungskörper für eine Arbeits- und Transportstellung des Fahrzeuges in eine im wesentlichen unbelastete Ruhestellung überführbar sind.

Über die Führungskörper, bevorzugterweise Führungsrollen (Rillenkugellager), kommt es nicht mehr zu einer direkten Paarung zwischen den beweglich geführten Ausschubteilen und den ortsfest festgelegten Ausschubführungen, so dass diese Führungskörper im Hinblick auf eine kraftschonende Bewegung der beweglich geführten Ausschubteile gestaltet werden können. Um während der Transportfahrt eines Fahrzeuges, beispielsweise eines Kühlfahrzeuges oder eines Kühlanhängers zu verhindern, dass die Führungskörper, also z.B. die Führungsrollen, keine Belastungen auf den Ausschub ausüben, sind die Führungskörper in eine im wesentlichen unbelastete Ruhestellung zu überführen. Vorzugsweise sind die beweglich geführten Ausschubteile anzuheben, und zwar der innerhalb der ortsfest festgelegten Ausschubführungen, wonach im angehobenen Zustand keine Punktlast mehr auf die ortsfest festgelegten Ausschubführungen des Ausschubes einwirken kann.

Durch das Anheben der beweglich geführten Ausschubteile besteht im übrigen kein Kräfte übertragender Kontakt zwischen den ortsfest festgelegten Ausschubführungen und den Führungskörpern, so dass ein Festsetzen beispielsweise aufgrund eines Festrostens verhindert ist. Mit der Verwendung von rostfreien Lagern kann im übrigen die hohe Lebensdauer der Führungskörper sichergestellt werden.

Der Ausschub seinerseits kann unterhalb z.B. eines Kühlkofferaufbaus und damit unterhalb eines Aufbaubodens und unter dem Hauptträger des Fahrgestells befestigt werden. In der Arbeits- bzw. Transportstellung wird der Ausschub durch z.B. zwei Befestigungsschrauben an einer Kühlkofferanbindung und durch zwei Befestigungsschrauben am Fahrzeugchassis arretiert. Die Befestigungsschrauben am Chassis heben die beweglich geführten Ausschubteile an, wodurch die Führungskörper entlastet werden. Zum Ausziehen der beweglich geführten Ausschubteile werden die Befestigungselemente entfernt und die beweglich geführten Ausschubteile können bis zum Beispiel an einen ersten Anschlag ausgezogen werden. Dieser erste Anschlag markiert eine Wartungsposition, so dass Wartungen am Kühlgerät ermöglicht sind. Durch Lösen von z.B. Schrauben, die als Anschlag dienen, können die beweglich geführten Ausschubteile weiter ausgezogen werden. Dadurch ist mehr Platz für Instandhaltungs- und Reparaturarbeiten am Kühlgerät vorhanden. Nach der Reparatur/Instandsetzung des Kühlgerätes werden die beweglich geführten Ausschubteile wieder eingeschoben und die Befestigungselemente wieder eingesetzt. Das Kühlgerät seinerseits ist direkt am Ausschub ohne eine Befestigung am Fahrzeugchassis zu montieren. Eine Lagerung der beweglich geführten Ausschubteile ist auch über andere reibungsmindernde Maßnahmen wie beispielsweise Gleitlager in Form von Platten möglich.

Weitere vorteilhafte Ausgestaltungen des Fahrzeugaufbaus nach der Erfindung ergeben sich aus weiteren Unteransprüchen, der nachfolgenden Beschreibung und der Zeichnung. In der Zeichnung zeigen:
- Fig. 1: in einer Seitenansicht ein Ausführungsbeispiel eines Fahrzeugauf- baus nach der Erfindung an einem Zentralachsanhänger;

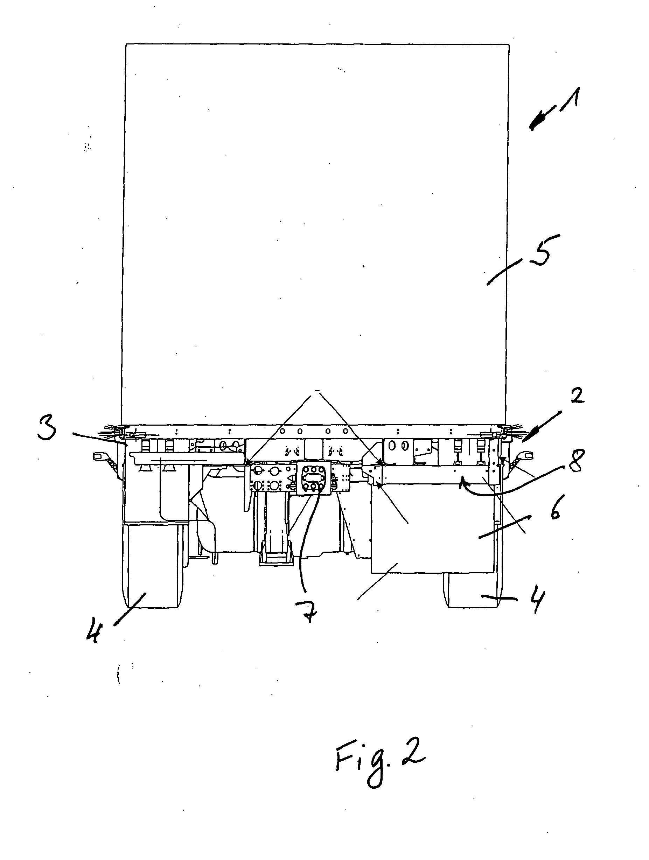

- Fig. 2: eine Vorderansicht auf den Zentralachsanhänger nach Fig. 1;
- Fig. 3: eine perspektivische Darstellung von oben seitlich gesehen auf ein Ausführungsbeispiel eines Ausschubes incl. Kühlaggregat;
- Fig. 4: eine Vorderansicht auf den Ausschub incl. Kühlaggregat in der Ar- beits- und Transportposition des Fahrzeuges (eingeschobener Zu- stand);
- Fig. 5: das Ausführungsbeispiel nach Fig. 4 in teilweise ausgeschobener Position (Wartungsposition);
- Fig. 6.: das Ausführungsbeispiel nach den Fig. 4 und 5 in ganz ausgezoge- ner Position (Instandhaltungs-/Reparaturposition);

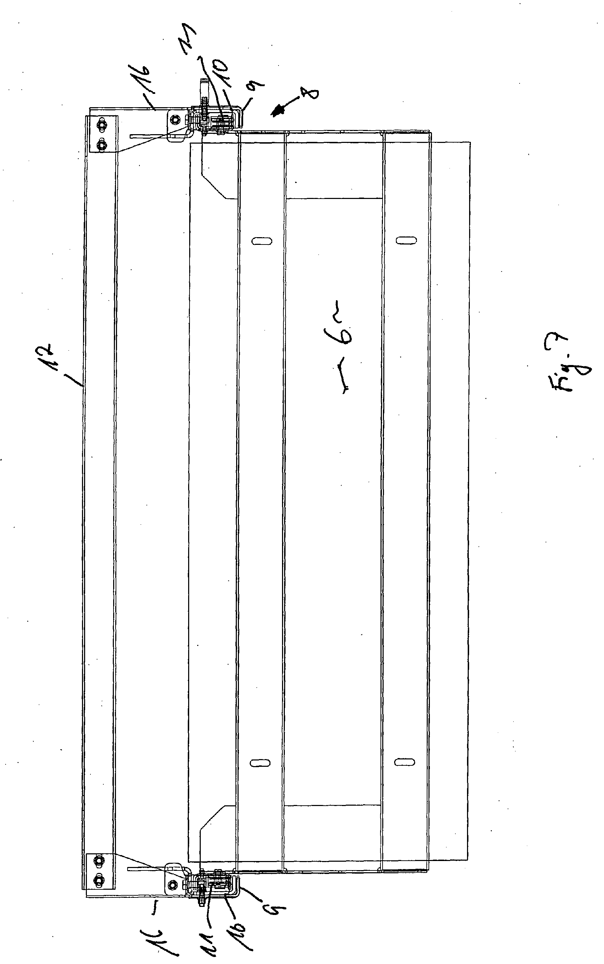

- Fig. 7: eine Ansicht auf den Ausschub mit Kühlaggregat von der Seite in der eingeschobenen Arbeits- und Transportposition und

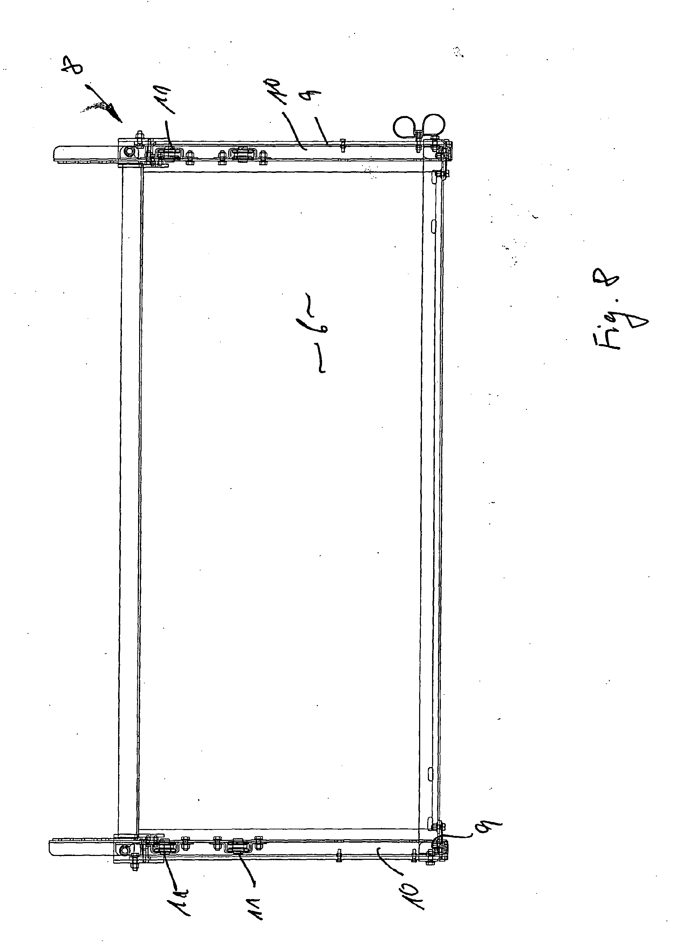

- Fig. 8: eine Ansicht von oben auf das Ausführungsbeispiel nach Fig. 7.

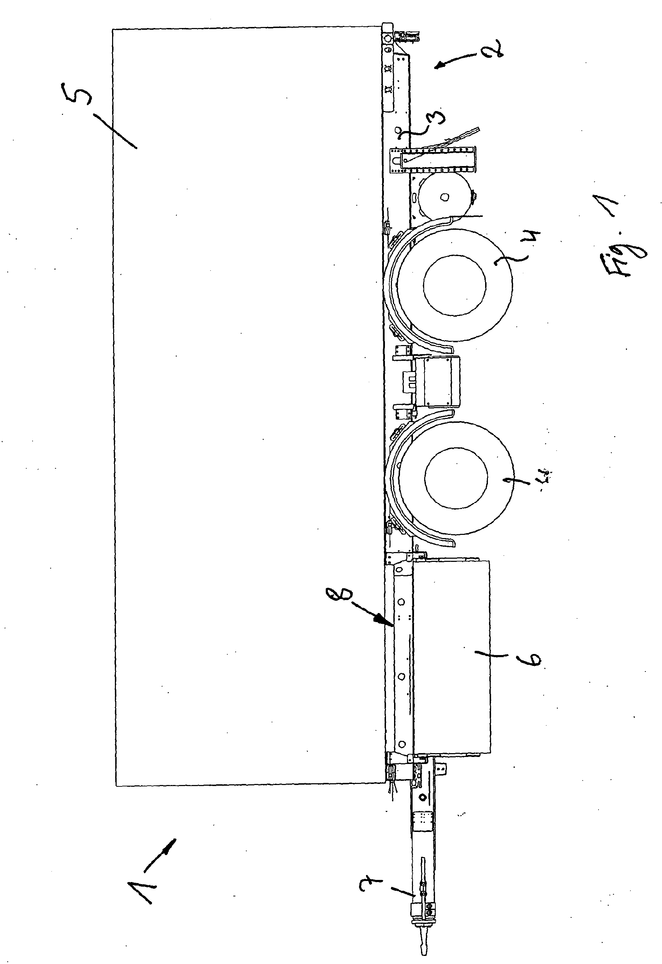

In der Zeichnung sind grundsätzlich gleichwirkende Teile mit übereinstimmenden Bezugsziffern versehen. In Fig. 1 ist ein Zentralachsanhänger 1 gezeigt mit einem Fahrgestell 2 und einen Hauptlangträger 3, das über Räder 4 auf dem Erdboden abgestützt ist. Der Zentralachsanhänger 1 trägt einen Kofferaufbau 5, der einen nicht im einzelnen ersichtlichen Aufnahmeboden aufweist, der an dem Hauptlangträger 3 bzw. dem Fahrgestell 2 abgestützt ist. Unterhalb des Aufbaus und somit unterhalb des Hauptlangträgers 3 und des Aufnahmebodens ist ein Kühlaggregat 6 vor den Reifen 4 und nach dem Zugkolben 7 untergebaut, und zwar über einen allgemein mit 8 bezifferten Ausschub.

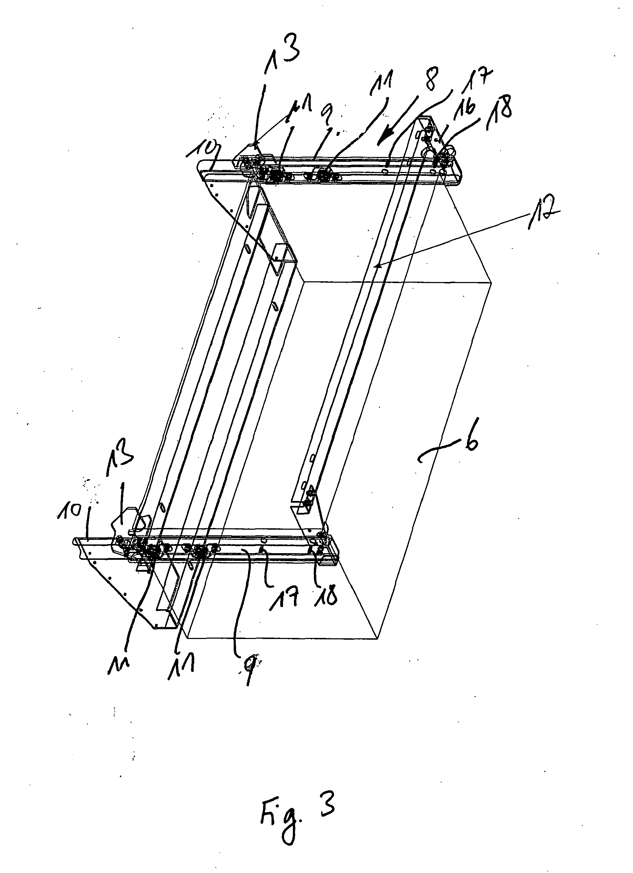

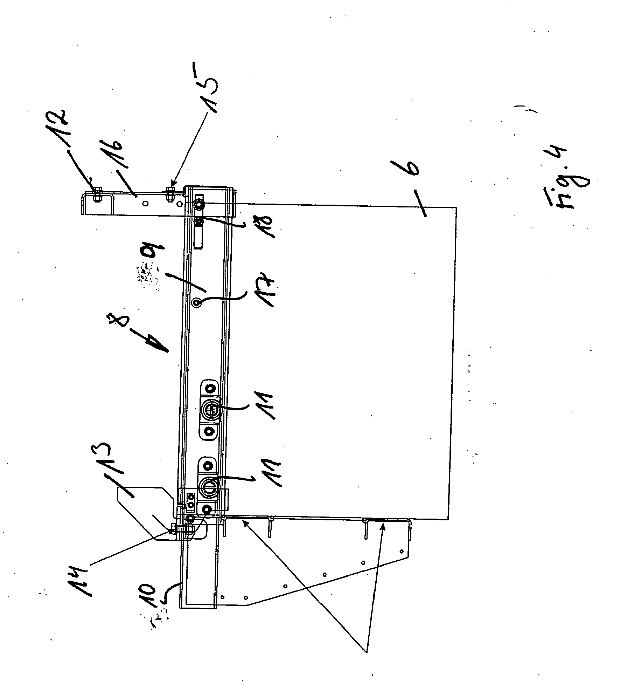

Wie im einzelnen näher aus den Fig. 3 bis 6 hervorgeht, hat der Ausschub 8 ortsfest am Fahrgestell 2 festgelegte Ausschubführungen 9, in denen bewegliche Ausschubteile 10 ein- und ausgezogen werden können. An diesen Ausschubteilen 10 ist das Kühlaggregat 6 befestigt und kann zusammen mit den Ausschubteilen 10 in die verschiedenen Positionen überführt werden, wie sie in den Fig. 4, 5 und 6 (eingeschobener Zustand; teilweise ausgezogener Zustand (Wartungsposition); ganz ausgezogener Zustand (Reparatur-/Instandhaltungsposition) dargestellt sind.

Die ortsfest festgelegten Ausschubführungen 9 sind derart ausgebildet, dass sie unterseitig Führungsrinnen haben, in denen Laufrollen 11 als Führungskörper abrollen können. Hierbei handelt es sich bevorzugterweise um Rillenkugellager, die über Dichtscheiben vor Schmutz zu schützen sind. Mit 12 ist eine Kofferanbindung angedeutet und mit 13 Halter zur Verbindung mit dem Hauptlangträger 3.

Die Ausschubführungen 9 und die beweglichen Ausschubteile 10 mit den Rollen 11 als Führungskörper sind derart aufeinander abgestimmt, dass die beweglich geführten Ausschubteile 10 innerhalb der Ausschubführungen 9 mitsamt den Rollen 11 angehoben werden können. Dies geschieht damit die Teile ganz eingeschoben sind (Fig. 4), wenn das Fahrzeug fährt bzw. transportiert. Dadurch werden die Führungen 9 und auch die Rollen 11 entlastet. Dies kann durch Schrauben geschehen, die vertikal ausgerichtet sind und am Fahrzeugchassis 3 oder sonst wo am Fahrgestell 2 gehalten sind. Alternativ sind auch Keile, Schnappverschlüsse und dgl. Hebemittel möglich. In diesen angehobenen Zustand sind der Ausschub 8 und das Kühlaggregat 6 sicher am Hauptlangträger 3 gehalten, ohne dass die durch die Fahrzeugbewegungen verursachten Erschütterungen und Kräfte auf die Ausschubführungen 9 bzw. die Rollen 11 wirken. Somit sind die Führungskörper 11 in einer Arbeits- und Transportstellung des Fahrzeuges 1 in eine im wesentlichen unbelastete Ruhestellung zu überführen.

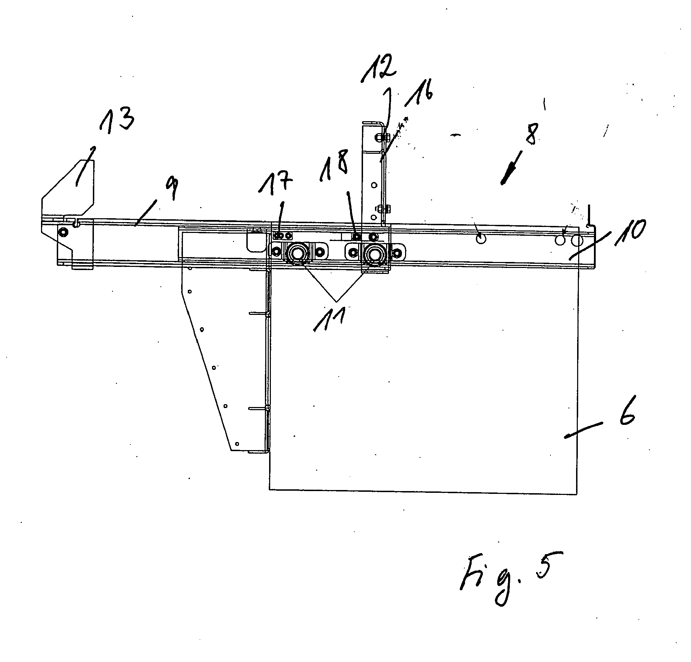

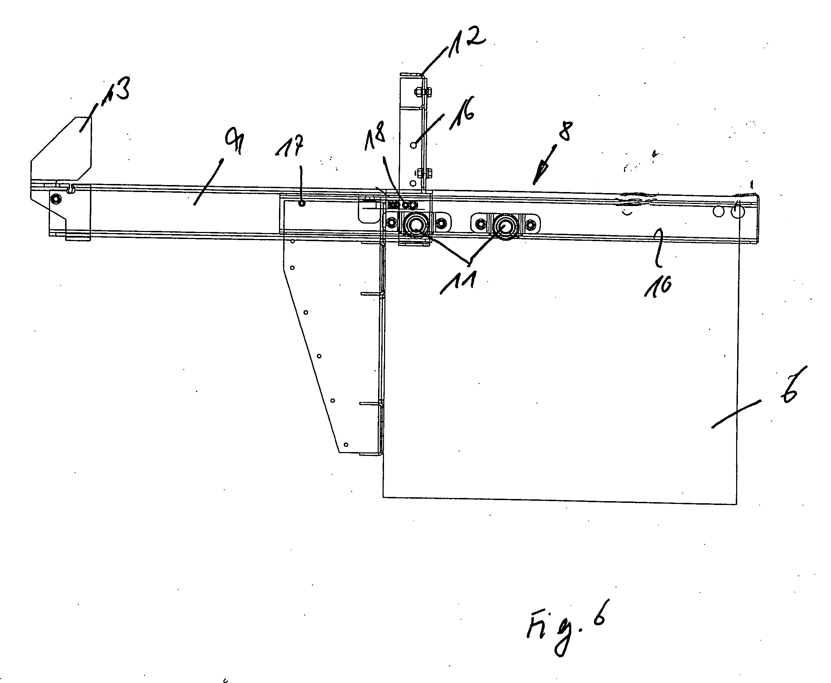

In Fig. 4 sind Ausschubfixierungen 14 angedeutet, die am Chassishalter vorgesehen sind. Zudem ist eine Ausschubfixierung 15 am Kofferhalter 16 vorgesehen. Diese Ausschubfixierung 14, 15, (in aller Regel Schrauben mit Muttern), werden entfernt, damit die beweglichen Teile 10 des Ausschubes 8 ausgeschoben werden können. In Fig. 5 sind Anschläge angedeutet. So ist mit 17 ein Anschlag für den Teilauszug der beweglich geführten Ausschubteile 10 beziffert, der wirkt, wenn der Ausschub in eine Wartungsposition ausgeschoben werden soll. Der Anschlag 18 wirkt, wenn der Ausschub 8 ganz ausgezogen werden soll in die Instandhaltungsposition gemäß Fig. 6.

## Patentansprüche

1. Fahrzeugaufbau für insbesondere Kühlfahrzeuge (1) mit einem über Räder (4) auf dem Erdboden abgestützten Fahrgestell (2) an dem ein Aufnahmeboden festlegbar ist, wobei unterhalb des Aufbaubodens ein an dem Fahrgestell (2) abgestützter Ausschub (8) mit ortsfest festgelegten Ausschubführungen (9) und mit in diesen beweglich geführten Ausschubteilen (10) vorgesehen ist, insbesondere zur Anordnung eines Unterflurkühlaggregates, **dadurch gekennzeichnet, dass** die beweglich geführten Ausschubteile (10) über Führungskörper (11) in den Ausschubführungen (9) bewegbar sind und die Führungskörper (11) für eine Arbeits- und Transportstellung des Fahrzeuges (1) in eine im wesentlichen unbelastete Ruhestellung überführbar sind.

2. Fahrzeugaufbau nach Anspruch 1, **dadurch gekennzeichnet, dass** die Führungskörper (11) als Führungsrollen ausgebildet und innerhalb der ortsfest festgelegten Ausschubführungen (9) abrollbar sind.

3. Fahrzeugaufbau nach Anspruch 1 oder 2, **dadurch gekennzeichnet, dass** die ortsfest festgelegten Ausschubführungen (9) eine Führungsrinne zur Führung der Führungskörper (11) aufweisen.

4. Fahrzeugaufbau nach einem der Ansprüche 1 bis 3, **dadurch gekennzeichnet, dass** an den Führungskörpern (11) Dichtelemente zum Verhindern einer Verschmutzung vorgesehen sind.

5. Fahrzeugaufbau nach Anspruch 4, **dadurch gekennzeichnet, dass** die Dichtelemente als Dichtscheiben ausgebildet sind.

6. Fahrzeugaufbau nach einem der Ansprüche 1 bis 5, **dadurch gekennzeichnet, dass** die beweglichen Ausschubteile (10) zum Überführen der Führungskörper (11) in die unbelastete Ruhestellung anhebbar ausgebildet sind.

7. Fahrzeugaufbau nach Anspruch 6, **dadurch gekennzeichnet, dass** die beweglich geführten Ausschubteile (10) in ihrem eingeschobenen Zustand innerhalb der ortsfest festgelegten Ausschubführungen (9) anhebbar sind.

8. Fahrzeugaufbau nach Anspruch 6 oder 7, **dadurch gekennzeichnet, dass** die beweglich geführten Ausschubteile (10) mittels Schrauben anhebbar sind.

9. Fahrzeugaufbau nach einem der Ansprüche 1 bis 8, **dadurch gekennzeichnet, dass** die beweglich geführten Ausschubteile (10) an lösbare Anschläge (17,18) in eine vorgegebene Ausschubstellung zu bewegen sind.

10. Fahrzeugaufbau nach Anspruch 9, **dadurch gekennzeichnet, dass** durch erste Anschläge (19) die beweglich geführten Ausschubteile in eine Wartungsposition für z.B. ein Unterflurkühlgerät und durch weitere lösbare Anschläge (18) in eine weiter ausgeschobene Reparaturposition zu bewegen sind.

11. Fahrzeugaufbau nach einem der Ansprüche 1 bis 10, **dadurch gekennzeichnet, dass** der Ausschub (8) als Träger eines Fahrzeugseitenschutzes ausgebildet ist.

12. Fahrzeugaufbau nach einem der Ansprüche 1 bis 11, **dadurch gekennzeichnet, dass** an dem Ausschub (18) ein Halter (19) zur Verbindung mit dem Fahrzeugchassis an einer Seite und an einer anderen Seite ein Halter (15) für eine Anbindung an einen einen Kofferaufbau (5) vorgesehen sind.
